# EUROPEAN PATENT APPLICATION

(11) **EP 1 667 137 A1**
(43) Date of publication of application: **07.06.2006**
(21) Application number: 04773204.5
(22) Date of filing: 16.09.2004
(51) Int. Cl.: G11B 7/24

(54) **TWO-LAYER PHASE-CHANGE INFORMATION RECORDING MEDIUM AND ITS RECORDING/REPRODUCING METHOD**

(30) Priority: 22.09.2003 JP 2003330490; 15.06.2004 JP 2004176429
(71) Applicant: Ricoh Company, Ltd., Tokyo 143-8555 (JP)
(72) Inventor: IWASA, Hiroyuki, Yokohama-shi, Kanagawa 224-0032 (JP); SHINOTSUKA, Michiaki, Hiratsuka-shi, Kanagawa 254-0814 (JP); SHINKAI, Masaru, Yokohama-shi, Kanagawa 240-0045 (JP)
(74) Representative: Barz, Peter
(86) International application number: PCT/JP2004/013558
(87) International publication number: WO 2005/029482

(57) **Abstract**

The purpose of the present invention is to provide a dual-layer phase-change information recording medium which excels in overwrite properties and allows high-density rewriting even when a blue-violet laser is used.

It is a dual-layer phase-change information recording medium containing a first substrate and a second substrate, and a first information layer, an intermediate layer and a second information layer disposed between the first substrate and the second substrate in this sequence, wherein at least any one of recording and reading of information is performed by laser beam irradiation from the first substrate side, the first information layer contains at least a first thermal diffusion layer, a first protective layer, a first recording layer, a second protective layer, a first reflective layer and a second thermal diffusion layer in this sequence, and each thickness of the first protective layer and the second protective layer is 35nm or less, each thickness of the first thermal diffusion layer and the second thermal diffusion layer is 10nm or more and the thickness of the first protective layer d₁ (nm) and the thickness of the second protective layer d₂ (nm) satisfy the relation of the next equation, d₁ ≤ d₂ + 5nm.

## Description

### Technical Field

The present invention relates to a dual-layer phase-change information recording medium used for performing at least any one of recording and reading of information by means of light such as a laser beam, and a recording and reading method of the dual-layer phase-change information recording medium. In the present description, "dual-layer" is defined as having two layers of information layers at least including a recording layer.

### Background Art

In compact discs (CD) or DVD (Digital Versatile Disc) systems in general, recording of information is performed by recording of binary signals using reflectance changes caused by the light interference from the bottom of the concave pits and mirror surface parts or detection of tracking signals.

In late years, phase-change rewritable compact discs (CD-RW: CD-Rewritable) are being broadly used as CD-compatible recording media for reading and various proposals are given for DVD systems such as phase-change rewritable DVD. A Blue-ray Disk system in which the recording and reading wavelength are shortened to 350nm to 420nm and numerical aperture (NA) is increased so as to have a capacity of 20GB or more has been proposed whereas the capacity of DVD is 4.7GB.

These phase-change rewritable CD and DVD dictate the recording information signals using reflectance changes and phase differences caused by refractive index difference between amorphous and crystal conditions. The phase-change recording media in general have a structure containing at least lower protective layer, phase-change recording layer, upper protective layer and reflective layer disposed on a substrate in this sequence and multiple interactions of these layers can be used to control reflectance and phase differences for the media to become CD or DVD compatible. Within the range of reflectance being decreased by about 15% to 25%, CD-RW can be made CD compatible in terms of recording signals and groove signals, and reading is possible with a CD drive with additional amplification system to make up low reflectance.

Recently, a one-sided dual-layer structure has been proposed from the viewpoint of increasing recording capacity of rewritable phase-change recording media (Patent Literatures 1 to 3).

The phase-change recording media can perform erasing and rewriting using only power modulation of one conversing light beam and recording includes overwrite (O/W) recording in which recording and erasing are performed simultaneously in the phase-change recording media such as CD-RW or rewritable DVD.

Crystal, amorphous or combination of these conditions can be applied for recording of information using phase changes and it is possible to apply multiple crystal phases, however, rewritable phase-change recording media that have been put in practical use currently recognize at least one of unrecorded and erased condition as crystal condition and perform a recording operation by forming amorphous marks.

Chalcogen elements such as chalcogenide alloys including S, Se and Te are mainly used for material of phase-change recording layers. Examples include GeSbTe series mainly consist of GeTe-Sb₂Te₃ pseudo-binary alloy, InSbTe series mainly consist of InTe-Sb₂Te₃ pseudo-binary alloy, AgInSbTe series and GeSbTe series mainly consist of Sb_{0.7}Te_{0.3} eutectic alloy, and the like. In particular, a recording material of Sb-Te eutectic alloy series, one of the materials popularly used for phase-change recording media such as CD-RW, etc., excels in erasing ratio compared to that of the recording material of GeTe-Sb₂Te₃ pseudo-binary compound series. And it is also known as the best from the viewpoint of definite outline of amorphous part of the recording marks because of high sensitivity.

However, in order for the above-noted Sb-Te eutectic recording material to be transformed to amorphous, the material needs to have a quenching structure in which quenching in a shorter time is required, because the crystallization rate of Sb-Te eutectic recording material is fast. Therefore, a Sb-Te eutectic recording material has a problem such that forming a mark is difficult with the structure having a thin reflective layer such as a one-sided dual-layer recording layer.

A method for further providing a layer on the reflective layer using a nitride, a carbide or the like having a relatively high thermal conductivity and small light absorbance for assisting in the thermal diffusion function of a reflective layer (this may be referred to as "thermal diffusion layer"), has been proposed for a single-layer phase-change information recording medium (Patent Literature 4) and a dual-layer phase-change information recording medium (Patent Literature 2). This method is thought as an effective method for eliminating the above-mentioned disadvantages that occur when a reflective layer constituting the first information layer is formed very thin.

However, these materials like nitride or carbide have a higher stress, so a formed thermal diffusion layer is subject to cracks. Consequently, this develops a problem that the optical disc itself with a thermal diffusion layer provided therein cannot get sufficient overwrite properties. In addition, in a next-generation optical disc such as Blue-ray Disk system which uses a blue-violet laser, a carbide material has a problem that it is impossible to increase the light transmittance of the first information layer, because carbide has a high light absorbance particularly on the short-wavelength side.

The protective layer disposed between the substrate and the recording layer as seen from light injection side of the first information layer in an existing dual-layer phase-change recording medium is thickly formed from the viewpoint of overwrite properties. However, if the protective layer is thick, layer thickness fluctuation becomes large and reflectance fluctuates within the surface. For this reason, A1N is disposed above and below the recording layer to have heat radiation structure in the Nonpatent Literature 1, however, it is a trilaminar structure such as ZnS and SiO₂/AlN/ZnS and SiO₂ and total layer thickness would not be thin enough to solve above problems caused by thickness fluctuation. Moreover, a method in which two protective layers are disposed and the thermal conductivity of the protective layer is set higher than that of the protective layer material having contact with the recording layer has been proposed in Patent Literature 3. However, because the thickness of the protective layer having contact with the recording layer is 30nm or more in this method, this is not satisfactory for a quenching structure for Sb-Te eutectic recording material. And it also poses a problem for next-generation optical discs using blue-violet laser such that the satisfactory effect cannot be obtained with a thickness of 30nm or more due to small spot diameter.

[Patent Literature 1] Japanese Patent (JP-B) No. 2702905

[Patent Literature 2] Japanese Patent Application Laid-Open (JP-A) No. 2000-222777

[Patent Literature 3] JP-A No. 2000-322770

[Patent Literature 4] JP-A No. 08-50739

[Nonpatent Literature 1] ODS2001, Technical Digest P28

### Disclosure of Invention

The present invention is therefore presented in the light of the present situation to solve various problems with the related art as well as to provide a dual-layer phase-change information recording medium which excels in overwrite properties and allows high-density rewriting even when a blue-violet laser is used and a recording and reading method using the dual-layer phase-change information recording medium.

The means to solve above problems are as follow.
<1> A dual-layer phase-change information recording medium containing a first substrate and a second substrate, and a first information layer, an intermediate layer and a second information layer disposed between the first substrate and the second substrate in this sequence, wherein at least any one of recording and reading of information is performed by laser beam irradiation from the first substrate side, the first information layer contains at least a first thermal diffusion layer, a first protective layer, a first recording layer, a second protective layer, a first reflective layer and a second thermal diffusion layer in this sequence, and each thickness of the first protective layer and the second protective layer is 35nm or less, each thickness of the first thermal diffusion layer and the second thermal diffusion layer is 10nm or more and the thickness of the first protective layer d₁ (nm) and the thickness of the second protective layer d₂ (nm) satisfy the relation of the next equation, d₁ ≤ d₂ + 5nm. Because each thickness of the first protective layer and the second protective layer is 35nm or less, each thickness of the first thermal diffusion layer and the second thermal diffusion layer is 10nm or more and the thickness of the first protective layer d₁ (nm) and the thickness of the second protective layer d₂ (nm) satisfy the relation of the next equation, d₁ ≤ d₂ + 5nm in the dual-layer phase-change information recording medium as stated in <1>, it is possible to provide a dual-layer phase-change information recording medium which excels in overwrite properties and allows high-density rewriting even when a blue-violet laser is used.
<2> The dual-layer phase-change information recording medium as stated in above <1>, wherein the thermal conductivities of the first thermal diffusion layer and the second thermal diffusion layer are higher than the thermal conductivities of the first protective layer and the second protective layer. By setting the thermal conductivity of the first thermal diffusion layer higher than that of the first protective layer in the dual-layer phase-change information recording medium as stated in above <2>, it is possible to assure a rapid quenching structure in consideration of deferred effect of heat conduction in the protective layers and to improve erasing ratio leading to the improvement of overwrite properties. And by setting the thermal conductivity of the second thermal diffusion layer higher than that of the second protective layer, it is possible to supplement the thermodiffusion effect of a thinly formed first reflective layer and assure a rapid quenching structure.
<3> The dual-layer phase-change information recording medium as stated in above <1>, wherein the first protective layer and the second protective layer are composite dielectrics containing 50mol% or more and 90mol% or less of at least one selected from ZnS, ZnO, TaS₂ and rare-earth sulfide and also comprising a thermostable compound having a melting point or decomposition point of 1,000°C or more.
<4> The dual-layer phase-change information recording medium as stated in above <3>, wherein the thermostable compound having a melting point or decomposition point of 1,000°C or more is any one of oxide, nitride and carbide of an element selected from Mg, Ca, Sr, Y, La, Ce, Ho, Er, Yb, Ti, Zr, Hf, V, Nb, Ta, Zn, Al, Si, Ge and Pb and fluoride of an element selected from Ca, Mg and Li.
<5> The dual-layer phase-change information recording medium as stated in above <4>, wherein the first protective layer and the second protective layer contain ZnS and SiO₂.
<6> The dual-layer phase-change information recording medium as stated in above <1> to <5>, wherein at least any one of the first protective layer and the second protective layer contains ZnS and at least any one of the first thermal diffusion layer and the second thermal diffusion layer contains an oxide exhibiting electric conducting property.
<7> The dual-layer phase-change information recording medium as stated in above <1> to <6>, wherein at least any one of the first thermal diffusion layer and the second thermal diffusion layer contains any one of IZO (In₂O₃-ZnO) and ITO (In₂O₃-SnO₂).
<8> The dual-layer phase-change information recording medium as stated in above <1> to <7>, wherein each thickness of the first protective layer and the second protective layer is 5nm to 30nm.
<9> The dual-layer phase-change information recording medium as stated in above <8>, wherein each thickness of the first protective layer and the second protective layer is 25nm or less.
<10> The dual-layer phase-change information recording medium as stated in above <1> to <9>, wherein each thickness of the first thermal diffusion layer and the second thermal diffusion layer is 10nm to 200nm.
   With regard to the dual-layer phase-change information recording medium as stated in any one of above <3> to <10>, it is possible to realize a favorable rapid quenching structure by selecting thicknesses or materials of the first protective layer, second protective layer, first thermal diffusion layer and second thermal diffusion layer.
<11> The dual-layer phase-change information recording medium as stated in above <1> to <10>, wherein the first recording layer contains Sb and Te and further contains at least one selected from Ag, In, Ge, Sn, Al, Ta, V, Co, Zr, Ga, Si, Nb, Cr, Pt, Pb, S, N and O.
<12> The dual-layer phase-change information recording medium as stated in above <1> to <11>, wherein the thickness of the first recording layer is 3nm to 15nm.
<13> The dual-layer phase-change information recording medium as stated in above <1> to <12>, wherein the first reflective layer contains at least one selected from Au, Ag, Cu, W, Al and Ta.
<14> The dual-layer phase-change information recording medium as stated in above <1> to <13>, wherein the thickness of the first reflective layer is 3nm to 20nm.
   With regard to the dual-layer phase-change information recording medium as stated in any one of above <11> to <14>, it is possible to optimize reflectance and recording sensitivity of each layer and transmittance of the first information layer based on recording and reading conditions and to provide a dual-layer phase-change information recording medium which excels in recording and reading properties of the first and the second information layers.
<15> The dual-layer phase-change information recording medium as stated in above <1> to <14>, wherein the optical transmittance of the first information layer relative to a laser beam wavelength of 350nm to 700nm is 40% to 70%. With regard to the dual-layer phase-change information recording medium as stated in above <15>, it is possible to provide a dual-layer phase-change information recording medium which excels in recording and reading properties and both of the first and the second information layers exhibit appropriate sensitivities.
<16> The dual-layer phase-change information recording medium as stated in above <1> to <15>, wherein a transparent layer is disposed between the first substrate and the first thermal diffusion layer. With regard to the dual-layer phase-change information recording medium as stated in above <16>, it is possible to provide a dual-layer phase-change information recording medium which can be easily manufactured even when the thickness of the first substrate is thin.
<17> The dual-layer phase-change information recording medium as stated in above <1> to <16>, wherein a first barrier layer is disposed between the second protective layer and the first reflective layer.
<18> The dual-layer phase-change information recording medium as stated in above <17>, wherein the first reflective layer contains Ag. With regard to the dual-layer phase-change information recording medium as stated in any one of above <17> and <18>, it is possible to provide a dual-layer phase-change information recording medium which suppresses the corrosion of the reflective layer and excels in storage reliability.
<19> The dual-layer phase-change information recording medium as stated in above <1> to <18>, wherein the thickness of the first substrate is 10µm to 600µm. With regard to the dual-layer phase-change information recording medium as stated in above <19>, it is possible to perform at least any one of recording and reading of information appropriately even when the numerical aperture (NA) of the objective lens is changed.
<20> A recording and reading method of dual-layer phase-change information recording medium containing irradiating a laser beam at a wavelength of 350nm to 700nm from a first substrate side to each information layer of a dual-layer phase-change information recording medium as stated in above <1> to <19> to perform at least any one of recording and reading of information. With regard to the recording and reading method of the dual-layer phase-change information recording medium as stated in above <15>, it is possible to perform at least any one of high-capacity recording and reading using the multilayer phase-change information recording medium as stated in any one of above <1> to <14>.

By the present invention, it is possible to provide a dual-layer phase-change information recording medium which is capable of solving various problems with related art, excels in overwrite properties and allows high-density rewriting even when a blue-violet laser is used.

### Brief Description of Drawings

FIG. 1 is an outlined cross-sectional view of an embodiment of a dual-layer phase-change information recording medium of the present invention.
FIG. 2 is an outlined cross-sectional view of another embodiment of a dual-layer phase-change information recording medium of the present invention.
FIG. 3 is an outlined cross-sectional view of a dual-layer phase-change information recording medium having grooves on the first and the second substrates.
FIG. 4 is an outlined cross-sectional view of a dual-layer phase-change information recording medium having grooves on the first substrate and the intermediate layer.

### Best Mode for Carrying Out the Invention

### (Dual-Layer Phase-Change Information Recording Medium)

The dual-layer phase-change information recording medium of the present invention contains at least a first information layer, an intermediate layer and a second information layer disposed in this sequence between a first substrate and a second substrate and further contains other layers as necessary.

The first information layer contains at least a first thermal diffusion layer, a first protective layer, a first recording layer, a second protective layer, a first reflective layer and a second thermal diffusion layer disposed in this sequence and further contains other layers as necessary.

In the present invention, each thickness of the first protective layer and the second protective layer is 35nm or less, each thickness of the first thermal diffusion layer and the second thermal diffusion layer is 10nm or more and the relation between the thickness of the first protective layer d₁ (nm) and the thickness of the second protective layer d₂ (nm) satisfy the next equation, d₁ < d₂ + 5nm. The detail will be discussed later.

It is preferable for the thermal conductivities of the first thermal diffusion layer and the second thermal diffusion layer to be higher than those of the first protective layer and the second protective layer.

With regard to recording layers and reflective layers of phase-change material in the dual-layer phase-change information recording medium of the present invention, known arts are applicable, however, specific materials are used for protective layers and thermal diffusion layers and the relation between the thickness of the first protective layers and the thickness of the second protective layers is regulated.

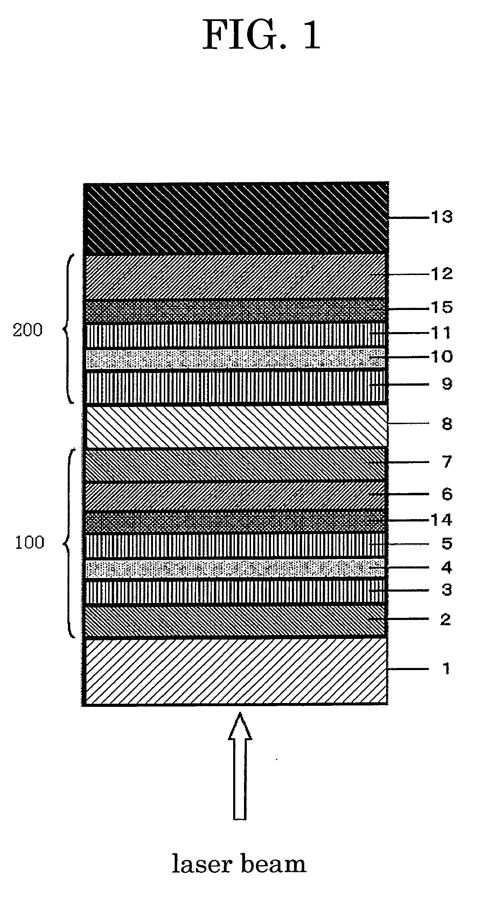

FIG. 1 is an outlined cross-sectional view showing an embodiment of a dual-layer phase-change information recording medium of the present invention. The information recording medium contains a first substrate 1, a first thermal diffusion layer 2, a first protective layer 3, a first recording layer 4, a second protective layer 5, a first barrier layer 14, a first reflective layer 6, a second thermal diffusion layer 7, an intermediate layer 8, a third protective layer 9, a second recording layer 10, a fourth protective layer 11, a second barrier layer 15, a second reflective layer 12 and a second substrate 13 and further contains other layers as necessary. Meanwhile, the first barrier layer 14 and the second barrier layer 15 are disposed as necessary.

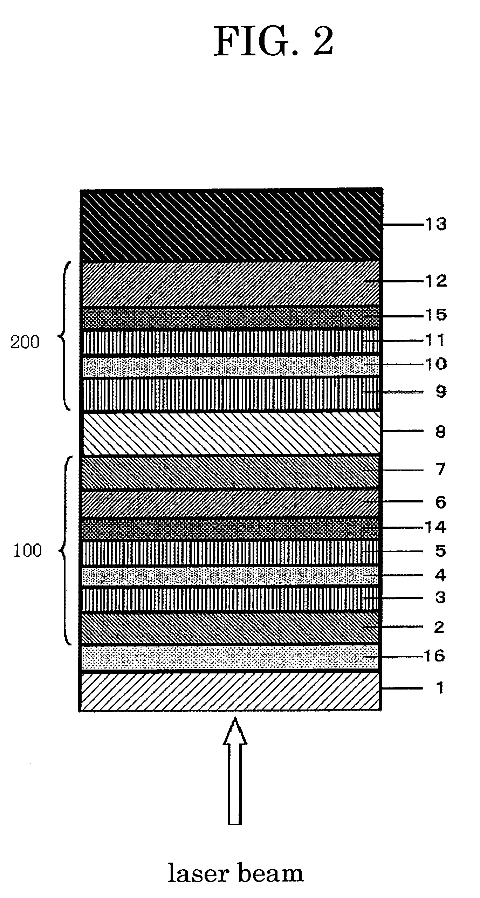

FIG. 2 is an outlined cross-sectional view showing another embodiment of a dual-layer phase-change information recording medium of the present invention. The information recording medium contains a first substrate 1, a transparent layer 16, a first thermal diffusion layer 2, a first protective layer 3, a first recording layer 4, a second protective layer 5, a first barrier layer 14, a first reflective layer 6, a second thermal diffusion layer 7, an intermediate layer 8, a third protective layer 9, a second recording layer 10, a fourth protective layer 11, a second barrier layer 15, a second reflective layer 12 and a second substrate 13 and further contains other layers as necessary. Meanwhile, the first barrier layer 14, the second barrier layer 15 and a transparent layer 16 are disposed as necessary. The transparent layer 16 is disposed when a thin sheet-like material is used for the first substrate 3 and the manufacturing method differs from that of the information recording medium of FIG. 1.

Meanwhile, the sequence of each layer contained in the dual-layer phase-change information recording medium in FIGS. 1 and 2 is favorable for irradiating a conversing light beam for recording and reading such as a laser beam to a recording layer through the first substrate 1.

### -Substrate-

The first substrate 1 is need to be able to transmit the irradiated light for sufficient recording and reading and may be selected from know materials in the art accordingly.

The materials generally used for the first substrate 1 are glasses, ceramics, resins, etc. and resins are preferable in terms of formability and cost.

Examples of resins include polycarbonate resin, acrylic resin, epoxy resin, polystyrene resin, acrylonitrile-styrene copolymer resin, polyethylene resin, polypropylene resin, silicone resin, fluorine resin, ABS resin and urethane resin. Of these, polycarbonate resin and acrylic resins such as polymethylmethacrylate (PMMA) are preferable for excellent formability, optical property and cost. The polycarbonate resin is most preferable because it is broadly used in CD and time-tested, and is inexpensive.

On the surface of the first substrate 3 on which information layers are formed, concavo-convex patterns which are generally called "groove parts" and "land parts" and are spiral or concentric grooves for laser beam tracking, may be formed and these are generally formed by injection molding or photopolymer method. The pitch is preferably 0.8µm or less and more preferably 0.1µm to 0.8µm. The grooves are not necessarily geometrically rectangular or trapezoidal and they may be optically formed waveguide having different refractive index by ion implantation.

The thickness of the first substrate 3 is not particularly limited and may be selected accordingly. It is preferably 10µm to 600µm. The substrate thickness is preferably adjusted by numerical apertures (NA) of the recording and reading system and it is more preferably 550µm to 600µm when NA=0.65 and more preferably 69µm to 100µm when NA=0.85.

The material for the second substrate 13 may be the same material as used for the first substrate 1 or an opaque material for recording and reading light and may differ from the first substrate 1 in terms of quality of material and groove form. The thickness of the second substrate 13 is not particularly limited and may be selected accordingly. The total thickness of the first substrate 1 and the second substrate 13 is preferably 1.1mm to 1.3mm. It is more preferable to adjust the total thickness so that the thickness of the second substrate 13 becomes approximately 1.2mm.

### -Intermediate Layer and Transparent Layer-

The light absorbance of the intermediate layer 8 and the transparent layer 16 are preferably small at a light wavelength irradiated for recording and reading. The materials are preferably resins in terms of formability and cost and examples include ultraviolet curable resin, slow-acting resin and thermoplastic resin. Moreover, a two-sided tape for optical disc bonding such as pressure-sensitive adhesive sheet, DA-8320 manufactured by Nitto Denko Corporation may be used.

Meanwhile, concavo-convex patterns such as guiding grooves formed by injection molding and photopolymer method may be formed on the second substrate 13 and the intermediate layer 8 as similar to the first substrate 1.

The intermediate layer 8 is formed in order for a pickup to be able to discriminate a first information layer and a second information layer and optically separate them during recording and reading. The thickness of the intermediate layer 8 is preferably 10µm to 70µm. When it is thinner than 10µm, crosstalks between layers occur, and when it is thicker than 70µm, spherical aberration occurs and recording and reading are likely to become difficult when performing recording and reading in the second information layer.

The thickness of the transparent layer 16 is not particularly limited and may be selected accordingly. It is necessary to adjust the thickness of the first substrate 1 and the transparent layer 16 so that the optimal thickness of the first substrate 1 of a dual-layer phase-change information recording medium prepared by a manufacturing method which does not have a transparent layer 16 as shown in FIG. 1 and the total thickness of the first substrate 1 and the transparent layer 16 of an optical information recording medium prepared by different manufacturing method as shown in FIG. 2 become approximately equal. For example, if NA=0.85 and an appropriate recording and reading performance can be obtained with a thickness of the first substrate 1 of the information recording medium as shown in FIG. 1 being 100µm, when the thickness of the first substrate 1 of the information recording medium as shown in FIG. 2 is 50µm, the thickness of the transparent layer 16 is preferably 50µm.

### -Recording Layer-

The first recording layer 4 and the second recording layer 10 are phase-change recording layers and preferred thickness differs between the first recording layer 4 and the second recording layer 10. The thickness of the first recording layer 4 is preferably 3nm to 15nm and more preferably 3nm to 10nm. When the thickness of the first recording layer 4 is less than 3nm, it is difficult to form layers of uniform thickness, crystallization speed is likely to be slowed and erasing in a short period of time may be difficult. When it is more than 15nm, transmittance is decreased and the sensitivity of the second information layer may be deteriorated.

On the other hand, the thickness of the second recording layer 10 is preferably in the range of 3nm to 100nm. When the thickness is less than 3nm, the same problems as in the first recording layer 4 may arise, and when it is more than 100nm, optical contrast may be difficult to obtain and cracks are likely to occur.

The thickness of the second recording layer 10 is preferably 3nm to 25nm for high density recording in which the shortest mark length is 0.5µm or less. When it is less than 3nm, reflectance becomes too low and it is likely to cause inhomogeneous composition during early phase of layer growth and effect of nondense layers. When the thickness is more than 25nm, heat capacity is increased deteriorating recording sensitivity and the jitter is likely to be high because of disturbance in amorphous mark edges caused by three dimensional crystal growths. Furthermore, a volume change caused by phase change in the second recording layer 10 becomes distinguishable and it is unfavorable because repeated overwrite (O/W) durability is deteriorated. The thickness of the second recording layer 10 is therefore preferably 3nm to 20nm from a viewpoint of jitter of mark ends and repeated overwrite (O/W) durability.

The densities of the first recording layer 4 and the second recording layer 10 are preferably 80% or more of bulk density and more preferably 90% or more of bulk density.

In order to increase densities of the first recording layer 4 and the second recording layer 10, it is necessary to lower the pressure of sputtering gas (rare gas such as Ar) during layer formation by sputtering or to increase the amount of high-energy Ar irradiated to the recording layer by positioning the substrate close to the front of the target. The high-energy Ar is any one of Ar ions irradiated toward a target for sputtering which are bounced back partially and reach the substrate side and Ar ions in plasma which are accelerated by sheath voltage of entire surface of the substrate to reach the substrate. Such irradiation effect of high-energy rare gas is called "atomic peening effect".

In Ar gas sputtering used generally, Ar is mixed into the sputter layer by "atomic peening effect". The degree of atomic peening effect can be estimated from the Ar amount mixed in the layer. In other words, if the Ar amount is small, so is the irradiation effect of high-energy Ar and nondense layers are likely to be formed. On the other hand, if the Ar amount is large, irradiation of high-energy Ar is intense and the density increases, however, Ar mixed in the layer is deposited as void during repeated overwriting (O/W) and repeated durability is deteriorated.

The appropriate Ar amount in the recording layers (the first recording layer 4 and the second recording layer 10) is 0.1 atomic % to 1.5atomic %. Furthermore, it is favorable to use high-frequency sputtering instead of direct current sputtering because it is possible to decrease Ar amount in the layer and obtain a high-density layer.

The materials of the first recording layer 4 and the second recording layer 10 are composed of thin layers consisting mainly of an alloy which contains Sb and Te as main constituents. Also, other elements may be added to each of the above layer as necessary until it is approximately 10atomic % in total. Of these elements, Ge is preferable in terms of storage stability and strong contrast ratio. And optical constant of the recording layers can be finely adjusted by further adding at least one element selected from O, N and S to each recording layer in the range of 0.1atomic % to 5atomic %. However, it is unfavorable to add more than 5atomic % because it lowers crystallization speed and deteriorates erasing performance.

And the loadings of at least one selected from V, Nb, Ta, Cr, Co, Pt and Zr is preferably 8 atomic % or less and more preferably 0.1 atomic % to 5 atomic % in order to improve stability over time without lowering crystallization speed during overwriting.

The total loadings of the above additive element and Ge based on SbTe is preferably 15 atomic % or less. If it is more than 15 atomic %, a phase separation besides Sb is induced. It has a profound effect especially when Ge content is 3 atomic % or more and 5 atomic % or less.

The loadings of at least one of Si, Sn and Pb is preferably 5 atomic % or less and more preferably 0.1 atomic % to 3 atomic % for fine adjustment of refractive index and improvement of stability over time. The total loadings of these additive elements and Ge is preferably 15 atomic % or less and more preferably 0.2 atomic % to 10 atomic %. Meanwhile, each element of Si, Sn and Pb is an element having four-coordinate network like Ge.

Moreover, adding 8 atomic % or less of Al, Ga and In is effective for jitter decrease and improving recording sensitivity as well as increasing crystallization temperature, however, segregation is also likely to occur, therefore, it is preferably 0.1 atomic % to 6 atomic %. The total loadings of each Al, Ga and In with Ge is preferably 15 atomic % or less and more preferably 0.2 atomic % to 13 atomic %. It is effective to add Ag in the amount of 8 atomic % or less for improving recording sensitivity and it has prominent effect especially when it is used when Ge amount is more than 5 atomic %. However, if the loadings of Ag is more than 8 atomic %, it is unfavorable because it may increase jitter and stability of amorphous marks may be deteriorated. Furthermore, if the total loadings with Ge is more than 15 atomic %, it is unfavorable because segregation is likely to occur. The most preferable loadings of Ag is 5 atomic % or less.

The conditions after layer formation of the first recording layer 4 and the second recording layer 10 in general are amorphous. Consequently, it is necessary to crystallize entire surface of each recording layer after layer formation to create initialized conditions (unrecorded conditions). The initialization process may be performed by solid phase annealing, however, it is preferably performed by melt-recrystallization in which the recording layer is once melted, slowly cooled during recoagulation and crystallized. Each above layer has almost no nucleus of crystal growth right after layer formation and crystallization in solid phase is difficult, however, by melt-recrystallization, a small number of crystal nucleus is formed, then melted and recrystallization progresses rapidly mainly through crystal growth.

Because reflectance of the crystal produced by melt-recrystallization and the reflectance of the crystal produced by solid phase annealing differs in the first recording layer 4 and the second recording layer 10, it causes noise if they are mixed. And because erasing parts become crystals by melt-recrystallization during actual overwrite recording, it is also preferable to perform initialization by melt-recrystallization.

It is favorable to melt the recording layers locally and for a short period of time, 1 millisecond or less during initialization performed by melt-recrystallization. The reason for this is because if the melting region is wide or melting time or cooling time is too long, each layer may be destructed or the surface of the plastic substrates may be deformed by heat.

In order to provide appropriate thermal history for initialization, it is desirable to irradiate high-power laser diode of approximately 600nm to 1,000nm wavelength which is focused in the range of 100µm to 300µm in long axis and 1µm to 3µm in short axis and scan at a linear velocity of 1m/s to 10m/s in a short-axis direction as scanning axis. If the same converging light is close to circular form, melting region is too wide and it is likely to return to amorphous state or damages given to multilayer composition or substrates are large and therefore not favorable.

It is possible to confirm if the initialization is performed by melt-recrystallization as follow. A recording light focused to a spot with a diameter approximately less than 1.5µm is irradiated to a medium after initialization with a write power Pw, an enough power to melt a recording layer by direct current at a constant linear velocity. If there are guiding grooves, it is performed while tracking servo or focus servo are being activated in those grooves or tracks between grooves. After irradiation, the initialized condition is confirmed to be a melt-recrystallized condition if the reflectance of erasing condition obtained by irradiating an erasing light with an erasing power Pe (≤ Pw) by direct current on the same track is the same with the reflectance of unrecorded initial condition. Because recording layers are once melted by irradiation of recording light and completely recrystallized condition of the recording layers created by irradiation of erasing light has been processed with melting by recording light and recrystallization by erasing light, it is in a melt-recrystallized condition.

Moreover, when the reflectance (Rini) of an initialized condition is about the same with the reflectance (Rcry) of a melt-recrystallized condition, the reflectance difference defined by (Rini-Rcry)/{(Rini+Rcry)/2} is said to be 20% or less. Generally, the reflectance difference is preferably 20% or more with only solid phase crystallization by annealing, etc.

The first recording layer 4 and the second recording layer 10 are disposed on the surface (groove-formed side) of the first substrate 1 with the first recording layer 4 being disposed between the first protective layer 3 and the second protective layer 5 and the second recording layer 10 being disposed between the third protective layer 9 and the fourth protective layer 11 as shown in FIG. 1.

### -Protective Layer-

The first protective layer 3 is effective for preventing deterioration and alteration of the first recording layer 4 caused by high temperature during recording and it also plays an optical role for adjusting reflectance.

The second protective layer 5 works to prevent counter diffusion of the first recording layer 4 and the first reflective layer 6 and let the heat out effectively to the first reflective layer 6 while inhibiting the deformation of the first recording layer 4.

The third protective layer 9 in the second information layer 200 has the same function as the first protective layer 3 and it is effective in preventing deterioration and alteration of the second recording layer 10 caused by high temperature during recording and it also plays an optical role for adjusting reflectance.

The fourth protective layer 11 has the same function as the second protective layer 5 and let the heat out effectively to the second reflective layer 12 while inhibiting the deformation of the second recording layer 10.

The materials of the first protective layer 3, the second protective layer 5, the third protective layer 9 and the fourth protective layer 11 are determined with attention to refractive index, thermal conductivity, chemical stability, mechanical strength and adhesiveness. In general, oxides, sulfides, nitrides or carbides of metals or semiconductor or fluorides of Ca, Mg and Li or the like which are high in transparency and having high melting point can be used. After investigation of various materials, a mixture of ZnS and SiO₂ is most preferable considering above viewpoints and consistency with materials composing the first recording layer 4 and the second recording layer 10. Meanwhile, it is also effective to use above oxides, sulfides, nitrides, carbides and fluorides as well as the mixture of ZnS and SiO₂ in a composition controlled for refractive index control or in a mixed condition and it is not necessarily be a stoichiometrical composition.

The function of the protective layers will be explained. The layer composition of the first information layer 100 of the present invention belongs to one of layer compositions called quenching structure. The quenching structure realizes high erasing ratio through high-speed crystallization by employing a layer composition which facilitate heat radiation and increase cooling rate during recoagulation of recording layers while avoiding a problem of recrystallization during amorphous mark formation.

The each thickness of the first protective layer 3 and the second protective layer 5 is 35nm or less and they are preferably 5nm to 30nm. When the thickness is less than 5nm, it is likely to be destructed by deformation during melting of recording layers and the power needed for recording may become unnecessarily high because of too much heat radiation effect.

The thickness of the first protective layer 3 and the second protective layer 5 significantly affect repeated overwrite durability and are important for inhibiting jitter deterioration. When the thickness is more than 35nm, it is impossible to have a quenching structure and the temperature difference between recording layer side and the first reflective layer 6 side or the first thermal diffusion layer 2 side of the protective layer increases and the protective layer itself is likely to be deformed asymmetrically because of the difference in thermal expansion of both sides of the recording layer. Repetition of this is unfavorable because it accumulates microscopic plastic deformation inside the protective layers and leads to a noise increase.

It is possible to have low jitter during high density recording with the shortest mark length being 0.5µm or less if above materials are used for the protective layers. However, if a laser diode of short wavelength such as 700nm or less is employed to perform high density recording, it is necessary to pay more attention to the layer composition of the quenching structure. In particular, it is known that planarization of temperature distribution in a mark width direction is important for obtaining high erasing ratio and wide margin of erasing power in an investigation of one-beam overwrite properties employing small conversing light beam with a wavelength of 500nm or less and numerical aperture, NA of 0.55 or more.

This tendency is also observed in DVD-compatible optical systems employing an optical system with a wavelength of 630nm to 680nm and NA of approximately 0.6. In particular, it is preferable to employ a protective layer of low thermal conductivity with a thickness of 5nm or more and 25nm or less when performing high density recording of mark length modulation using such optical systems. In any way, it is possible to improve erasing ratio and erasing power margin by using materials of high thermal conductivity in particular for the first thermal diffusion layer 2 and the reflective layer 6 disposed on the protective layer. It is preferable to have a layer composition in which temperature distribution in a layer surface direction (a vertical direction of a scanning direction of the recording beam) can be planarized as much as possible as well as temperature distribution in a layer thickness direction or time variation in order to bring out an appropriate erasing property of the recording layer in the wide range of erasing power.

In the present invention, a layer composition of the information recording medium was designed appropriately so that the temperature distribution in a track crossing direction in the information recording medium was planarized and the width which can be melted and recrystallized without returning to its amorphous state can be widened to experimentally broaden the erasing ratio and erasing power margin. At the same time, it is recognized that the temperature distribution in the first recording layer 4 is planarized by accelerating heat radiation from the first recording layer 4 to the first reflective layer 6 having extremely high thermal conductivity through the second protective layer 5 which is very thin and has low thermal conductivity and yet by accelerating the heat radiation from the first recording layer 4 to the first thermal diffusion layer 2 having high thermal conductivity through the first protective layer 3 which is very thin and has low thermal conductivity. It is also possible to accelerate heat radiation by increasing the thermal conductivity of the first protective layer and the second protective layer, however, if the heat radiation is accelerated too much, irradiation power needed for recording increases, that is, the recording sensitivity is notably deteriorated.

It is preferable to use the first protective layer 3 and the second protective layer 5 which are thin and have low thermal conductivity. Since using the first protective layer 3 and the second protective layer 5 which are thin and have low thermal conductivity will cause a temporal delay of heat conduction for several nsec. to several tens of nsec. at a starting point of the write power irradiation from the first recording layer 4 to the first thermal diffusion layer 2 and then to the first reflective layer 6 and enable to accelerate heat radiation from the first thermal diffusion layer 2 to the first reflective layer 6 and then to the second thermal diffusion layer 7, the recording sensitivity is not deteriorated unnecessarily by heat radiation. The known materials for the protective layers containing SiO₂, Ta₂O₅, Al₂O₃, AIN, SiN and the like as main elements are not favorable for the first protective layer 3 and the second protective layer 5 of the dual-layer phase-change information recording medium of the present invention by themselves because of high thermal conductivity.

The "rapid quenching structure in consideration of deferred effect of heat conduction in the first protective layer 3 and the second protective layer 5" of the present invention is more effective than GeTe-Sb₂Te₃ recording layers used for DVD-RAM if applied for the above recording layer material. It is because the crystal growth during recoagulation near melting temperature (Tm) is the rate-controlling factor of recrystallization in the first recording layer 4 and the second recording layer 10. Moreover, the rapid quenching structure is effective for increasing cooling rate near melting temperature (Tm) to its maximum and forming amorphous mark and its edge steadily and definitely. And it is also more effective because it can definitely ensure erasing by recrystallization at a more high erasing power by planarization of temperature distribution in a layer surface direction although high-speed erasing was possible near melting temperature (Tm) from the beginning.

It is desirable that the materials of the first protective layer 3 and the second protective layer 5 have low thermal conductivity and its rough standard is 1×10⁻³pJ/(µm · K · nsec). However, thermal conductivity of these low heat conductive materials in form of thin layer is difficult to measure directly and a rough standard can be obtained from measurement result of heat simulation and actual recording sensitivity instead.

The examples of preferred low heat conductive materials of the first protective layer 3 and the second protective layer 5 which lead to a desirable result include composite dielectrics which contain 50 mol% or more and 90 mol% or less of at least one selected from ZnS, ZnO, TaS₂ and rare-earth sulfide and a thermostable compound having a melting point or decomposition point of 1,000°C or more.

In particular, it is preferably composite dielectrics which contain 60 mol% or more and 90 mol% or less of rare-earth sulfide such as sulfide of La, Ce, Nd and Y. Or, it is preferable to set the composition range of ZnS, ZnO or rare-earth sulfide to 70 mol% to 90 mol%.

Examples of thermostable compound material having a melting point or decomposition point of 1,000°C or more which is mixed with the composite dielectrics include oxides, nitrides, or carbides of Mg, Ca, Sr, Y, La, Ce, Ho, Er, Yb, Ti, Zr, Hf, V, Nb, Ta, Zn, Al, Si, Ge, Pb, and the like and fluorides of Ca, Mg, Li, and the like. Of these in particular, SiO₂ is preferred as a material to be mixed with ZnS.

The each thickness of the first protective layer 3 and the second protective layer 5 is preferably 30nm or less and more preferably 25nm or less because if it is thicker than 30nm, planarization effect of temperature distribution in a mark width direction would not be satisfactory. At the same time, when the thickness is less than 5nm, deferred effect of heat conduction in the recording layer part is unsatisfactory and recording sensitivity is notably deteriorated, therefore not favorable. Consequently, the each thickness of the first protective layer 3 and the second protective layer 5 is preferably 15nm to 25nm with a wavelength of recording laser beam at 600nm to 700nm. Moreover, it is preferably 5nm to 20nm and more preferably 5nm to 15nm with a wavelength of recording laser beam at 350nm to 600nm.

The relation between the thickness of the first protective layer 3, d₁ [nm] and the thickness of the second protective layer 5, d₂ [nm] satisfy d₁ < d₂ + 5nm. When d₁ is thicker than this, heat during recording is rapidly radiated toward reflective layer side and it becomes impossible to obtain rapid quenching effect by the first protective layer 3 which is an aspect of the present invention.

Meanwhile, a mixture of ZnS and SiO₂ is used for both of the first and the second protective layers in the present invention and it is advantageous in terms of lowering production cost to use the same material in different layers.

Next, the third protective layer 9 and the fourth protective layer 11 which compose the second information layer will be explained. The second information layer 200 is also preferably having a rapid quenching structure in order to perform high density recording. Therefore, the material and the thickness of the fourth protective layer 11 placed between the second recording layer 10 and the second reflective layer 12 is preferably of low thermal conductivity as described for the first protect layer 3 and the second protective layer 5.

The known materials in the art are applied for the third protective layer 9 and it is advantageous in terms of reduction of production cost if the same material used for the fourth protective layer such as a mixture of ZnS and SiO₂ is also applied for the third protective layer 9. The thickness of the third protective layer 9 is preferably 30nm to 200nm and it is preferable to design the thickness within above range to have an optimum reflectance. When the thickness is less than 30nm, recording layers may be deformed by heat during recording and when it is more than 200nm, it is likely to cause a problem in mass productivity.

### -Reflective Layer-

The first reflective layer 6 and the second reflective layer 12 have functions such as using irradiated light effectively to increase the cooling rate for easier amorphousization. Particularly, metals having extremely high thermal conductivity are used for the rapid quenching structure of the present invention and examples of such metals include Au, Ag, Cu, W, Al, Ta or alloys thereof. The additive elements used are Cr, Ti, Si, Pd, Ta, Nd and Zn.

Of these, Ag-based materials are preferable to be used for the reflective layers in the first information layer of the dual-layer phase-change information recording medium of the present invention because refractive index is small in blue wavelength region and it can minimize the light absorbance.

The reflective layers 6 and 12 may be formed by various vapor growth methods such as vacuum deposition, sputtering, plasma CVD, optical CVD, ion plating and electron beam deposition. Of these methods, sputtering excels in mass productivity and layer quality.

It is preferable to use Ag or alloy thereof having low refractive index and high thermal conductivity for the first reflective layer 6 because the first information layer is required to have a high transmittance. The thickness of the first reflective layer 6 is preferably 3nm to 20nm. When the thickness is less than 3nm, it may be difficult to form a thick layer with a uniform thickness. When the thickness is more than 20nm, transmittance is decreased and recording and reading of the second information layer 200 may be difficult.

The thickness of the second reflective layer 12 composing the second information layer 200 is preferably 50nm to 300nm and more preferably 80nm to 150nm. When the thickness is less than 50nm, heat radiation effect may be unsatisfactory for the rapid quenching structure without further disposing a thermal diffusion layer on the second reflective layer 12 even with pure Ag. When the thickness is more than 300nm, heat escapes in a vertical direction instead of horizontal direction and it does not contribute to heat distribution improvement in a horizontal direction. Also, the heat capacity of the second reflective layer 12 itself is large and the cooling rate of the second recording layer 10 may be lowered or microscopic flatness of the layer surface may be deteriorated.

It is possible to dispose at least one of a first barrier layer 14 between the second protective layer 5 and the first reflective layer 6 and a second barrier layer 15 between the fourth protective layer 11 and the second reflective layer 12. The most preferable materials are Ag alloy for the reflective layers and a mixture of ZnS and SiO₂ for the protective layers. If the reflective layer and the barrier layer are adjacent to each other, sulfur in the protective layer may cause Ag in the reflective layer to corrode and storage reliability may be lowered.

It is preferable to dispose a barrier layer when Ag-based materials are used for the reflective layer to avoid such problem. The barrier layer is required to have no sulfur and the melting point is higher than that of the recording layer. Specific examples include metal oxides such as SiO₂, ZnO, SnO₂, Al₂O₃, TiO₂ In₂O₃, MgO and ZrO₂, nitrides such as Si₃N₄, AlN, TiN and ZrN, carbides such as SiC, TaC, B₄C, WC, TiC and ZrC or mixtures thereof. The rate of absorption at a laser wavelength of these barrier layers is preferably small.

The barrier layers 14 and 15 may be formed by various vapor growth methods such as vacuum deposition, sputtering, plasma CVD, optical CVD, ion plating and electron beam deposition. Of these methods, sputtering excels in mass productivity and layer quality.

The each thickness of the barrier layers 14 and 15 is preferably 2nm to 10nm. When the thickness is less than 2nm, the prevention effect of Ag corrosion cannot be obtained and storage reliability may be deteriorated. When it is more than 10nm, quenching structure may not be obtained or transmittance may be deteriorated.

### -Thermal diffusion layer-

The thermal diffusion layers (the first thermal diffusion layer 2 and the second thermal diffusion layer 7) are disposed on purpose of supplementing thermal diffusion of the reflective layers thinly disposed for improving transmittance of the first information layer 100. Especially by disposing the thermal diffusion layer between the first substrate 1 and the first protective layer 3 and between the first reflective layer 6 and the intermediate layer 8, it is possible to secure a rapid quenching structure.

The material of the thermal diffusion layers 2 and 7 is desired to have higher thermal conductivity than those of the first protective layer 3 and the second protective layer 5. By making the thermal conductivity of the first thermal diffusion layer 2 higher than that of the first protective layer 3, it is possible to secure a rapid quenching structure considering the deferred effect of heat conduction in the protective layers and erasing ratio is improved leading to improvement of overwrite properties. And by making the thermal conductivity of the second thermal diffusion layer 7 higher than that of the second protective layer 5, it is possible to supplement the thermodiffusion effect of the thin first reflective layer 6 and secure a rapid quenching structure.

Moreover, it is desired to have a small absorption rate at a laser wavelength so that the second information layer 200 on the back can perform recording and reading thereon. The extinction coefficient at a laser wavelength used for recording and reading of information is preferably 0.5 or less and more preferably 0.3 or less. If the extinction coefficient is larger than 0.5, rate of absorption in the first information layer is increased and recording and reading of the second information layer 200 may be difficult.

One of the materials which satisfy these properties is an electroconductive oxide. Examples include In₂O₃, SnO₂, ZnO, CdO, TiO₂, CdIn₂O₄, Cd₂SnO₂ and Zn₂SnO₄. Of these, ITO (In₂O₃ -SnO₂) and IZO (In₂O₃-ZnO) have high thermal conductance and are preferably applied for the thermal diffusion layers. These can be used alone or in combination.

The each thickness of the first thermal diffusion layer 2 and the second thermal diffusion layer 7 is 10nm or more and preferably 10nm to 200nm. When the thickness is less than 10nm, it may be impossible to obtain radiation effect. When the thickness is more than 200nm, stress is increased and it may pose a problem in mass productivity as well as to deteriorate rewriting performance.

The optical transmittance of the first information layer 100 of the dual-layer phase-change information recording medium of the present invention at a laser beam wavelength used for recording and reading is preferably 40% to 70% and more preferably 45% to 60%. When the optical transmittance is less than 40%, recording and reading of the second information layer may be difficult. When the optical transmittance is more than 70%, the recording sensitivity or transmittance of the first information layer may be deteriorated.

### (Manufacturing Method of Dual-Layer Phase-Change Information Recording Medium)

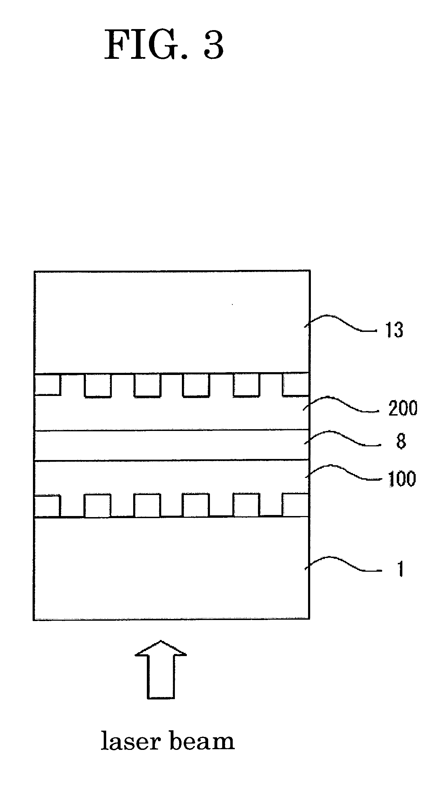

In the first embodiment of the manufacturing method of the dual-layer phase-change information recording medium of the present invention includes layer forming process, initialization process and attachment process and each process is basically performed in this sequence. FIG. 3 is an outlined cross-sectional view showing a dual-layer phase-change information recording medium produced by this method and grooves are formed on the first substrate 1 and the second substrate 13.

In the layer forming process, the first information layer 100 is formed on the surface of the first substrate 1 on which grooves are disposed and the second information layer 200 is formed on the second substrate 13 on which grooves are disposed and these are prepared separately.

Each layer composing the first information layer 100 and the second information layer 200 is formed by various vapor growth methods such as vacuum deposition, sputtering, plasma CVD, optical CVD, ion plating and electron beam deposition. Of these methods, sputtering excels in mass productivity and layer quality. Generally, a layer is formed in an inactive gas flow such as argon in sputtering and it is also possible to mix in oxygen and nitrogen, etc. to perform reaction sputtering.

In the initialization process, an energy beam such as laser beam is irradiated to the first information layer 100 and the second information layer 200 to initialize the entire surface, that is to crystallize recording layers.

If there is a concern of layers being separated from the disposed surface by laser beam energy during initialization process, it is possible to apply a UV resin on the first information layer and the second information layer by spin-coating and irradiate an ultraviolet ray to cure the resin to produce an over coat before performing initialization. Or, the first information layer and the second information layer may be initialized from the first substrate side after performing the next attachment process.

The above initialized first substrate 1 on which the first information layer 100 is formed and the second substrate 13 on which the second information layer 200 is formed are faced and attached to each other through an intermediate layer 8. For example, an ultraviolet curable resin may be applied on one surface of the first information layer or the second information layer by spin-coating to form an intermediate layer. The resin may be cured by ultraviolet irradiation after both substrates are pressurized and closely attached with both surfaces of the first and the second information layers facing each other.

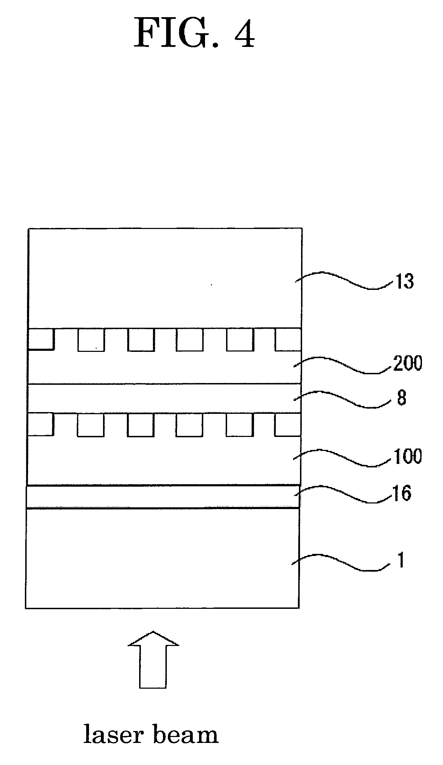

The second embodiment of the manufacturing method of the dual-layer phase-change information recording medium of the present invention includes first layer forming process, intermediate layer forming process, second layer forming process, substrate attachment process and initialization process and each process is basically performed in this sequence. FIG. 4 is an outlined cross-sectional view showing a dual-layer phase-change information recording medium produced by this method and grooves are formed on the intermediate layer 8 and the second substrate 13.

The first layer forming process is a process in which a second information layer 200 is formed on the surface of the second substrate 13 on which a guiding groove is disposed. The layer-forming process is as described above.

The intermediate layer forming process is a process in which an intermediate layer 8 having guiding grooves is formed on the second information layer 200. For example, an ultraviolet curable resin is applied on entire surface of the second information layer 200 and grooves are formed by curing with an ultraviolet irradiation while a stamper made of a material which can transmit ultraviolet ray is pressed against the resin.

The second layer forming process is a process in which a first information layer 100 is formed on the intermediate layer 8. The layer forming process is as described above.

The substrate attachment process is a process in which the first information layer 100 and the first substrate 1 are attached through the transparent layer 16. For example, a material of the transparent layer 16, an ultraviolet curable resin is applied on the first information layer 100 or the first substrate 1 by spin-coating, the first information layer 100 and the first substrate 1 are attached and the resin is cured by ultraviolet irradiation. Or the first substrate 1 may be formed by applying a resin, a material of the first substrate 1 and by curing the resin without forming the transparent layer 16.

In the initialization process, a light such as a laser beam is irradiated to the first information layer 100 and the second information layer 200 from the substrate 1 side to initialize the entire surface, that is to crystallize recording layers. Meanwhile, regard to the second information layer 200, the initialization may be performed right after intermediate layer forming process.

### (Recording and Reading Method)

Recording and reading of information are performed by irradiating a light beam of 350nm to 700nm wavelength to each information layer of the dual-layer phase-change information recording medium of the present invention from the first information layer side in the recording and reading method of the present invention.

In particular, a recording light such as laser diode at an oscillation wavelength of 350nm to 700nm, for example is irradiated from the first substrate side through objective lens while an optical recording medium is rotated at predetermined linear velocity or constant angular velocity. The recording layer absorbs the irradiated light and the temperature is increased locally and information is recorded by forming an amorphous mark, for example. The information recorded as above is readd by irradiating a laser beam to the optical recording medium from the first substrate side while rotating the optical recording medium at predetermined constant linear velocity and detecting the reflected light.

### Example

Herein below, with referring to Examples and Comparative Examples, the invention is explained in detail and the following Examples and Comparative Examples should not be construed as limiting the scope of this invention.

### (Example 1)

### -Preparation of Dual-Layer Phase-Change Information Recording Medium-

First, a first substrate of polycarbonate resin with 120mm diameter and 0.58mm thickness having guiding groove of 0.43µm pitch and 38nm groove depth on the surface was prepared.

Next, a first thermal diffusion layer of IZO (In₂O₃-10% by mass ZnO) with 60nm thickness was formed on the first substrate by magnetron sputtering using a sheeting sputtering apparatus manufactured by Balzers Ltd. A first protective layer of ZnS-20mol%SiO₂ with 10nm thickness was formed on the first thermal diffusion layer by magnetron sputtering.

A first recording layer of Ge₅Ag₁In₂Sb₇₀Te₂₂ with 6nm thickness was formed on the first protective layer by magnetron sputtering. A second protective layer of ZnS-20mol%SiO₂ with 10nm thickness was formed on the first recording layer by magnetron sputtering. A first reflective layer of Ag-3% by mass Zn-2% by mass A1 with 10nm thickness was formed on the second protective layer by magnetron sputtering. A second thermal diffusion layer of IZO (In₂O₃-10% by mass ZnO) with 70nm thickness was formed on the first reflective layer by magnetron sputtering. Finally, a first information layer was prepared.

First, a second substrate of polycarbonate resin with 120mm diameter and 0.58mm thickness having guiding groove of 0.43µm pitch and 38nm groove depth on the surface was prepared. Next, a second reflective layer of Al-3atomic%Ti with 80nm thickness was formed on the second substrate by magnetron sputtering using a sheeting sputtering apparatus manufactured by Balzers Ltd. A fourth protective layer of ZnS-20mol%SiO₂ with 20nm thickness was formed on the second reflective layer by magnetron sputtering. A second recording layer of Ge₅Ag₁In₂Sb₇₀Te₂₂ with 12nm thickness was formed on the fourth protective layer by magnetron sputtering. A third protective layer of ZnS-20mol%SiO₂ with 70nm thickness was formed on the second recording layer by magnetron sputtering. Finally, a second information layer was prepared.

Next, initialization was performed by irradiating a laser beam to the prepared first and second information layers from the first substrate side and from the surface of the second information layer respectively. The optical transmittance of the first information layer at a wavelength of 407nm was measured from the first substrate side using a spectral photometer manufactured by Shimadzu Corporation.

Next, a coating liquid containing ultraviolet curable resin (DVD 003 manufactured by Nippon Kayaku Co., Ltd.) was applied on the surface of the first information layer by spin-coating, the second information layer side of the second substrate was bonded and the ultraviolet curable resin was cured by irradiating an ultraviolet light from the first substrate side to form an intermediate layer with 35µm thickness. Finally, a dual-layer phase-change information recording medium in which the first substrate, the first information layer, the intermediate layer, the second information layer and the second substrate are formed in this sequence was produced.

### <Performance Test>

A conversing light beam was irradiated to the obtained dual-layer phase-change information recording medium using an optical system with a wavelength of 407nm and a numerical aperture of objective lens, 0.65 to perform recording under a condition of 6.0m/s linear velocity and 0.180µm/bit and initial jitter, jitter after 100 times of overwriting and recording sensitivity, a power at which a smallest jitter can be obtained were measured. The results are shown in Table 1.

As a result, jitter was 9% or less at a power of 13mW or less for the first recording layer and overwrite properties were also satisfactory. When recording was performed to the second information layer under the same condition, jitter was 9% or less at a power of 13mW or less and overwrite properties were also satisfactory.

Subsequently, thermal conductivity of ZnS-20mol%SiO₂ used for the first and the second protective layers and thermal conductivity of IZO (In₂O₃-10% by mass ZnO) used for the first and the second thermal diffusion layers were measured.

Each thermal conductivity was measured by forming a thin layer with 1,000nm thickness on a glass with 30µm thickness using laser heating. The thermal conductivity of ZnS-20mol%SiO₂ was 0.50W/m·K and thermal conductivity of IZO (In₂O₃-10% by mass ZnO) was 4.3W/m·K and it turns out that the thermal conductivity of the material composing the first and the second thermal diffusion layers is higher than that of the material composing the first and the second protective layers.

### (Example 2)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 50nm, the thickness of the first protective layer to 20nm and the thickness of the second protective layer to 15nm.

### (Example 3)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 50nm, the thickness of the first protective layer to 20nm, the thickness of the second protective layer to 20nm and the thickness of the second thermal diffusion layer to 75nm.

### (Example 4)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 40nm, the thickness of the first protective layer to 30nm, the thickness of the second protective layer to 25nm and the thickness of the second thermal diffusion layer to 75nm.

### (Example 5)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 40nm, the thickness of the first protective layer to 30nm, the thickness of the second protective layer to 30nm and the thickness of the second thermal diffusion layer to 80nm.

### (Example 6)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 60nm, the thickness of the second protective layer to 20nm and the thickness of the second thermal diffusion layer to 75nm.

### (Example 7)

### -Preparation of Dual-Layer Phase-Change Information Recording Medium-

A dual-layer phase-change information recording medium was prepared similarly to Example 1 except for changing the each layer thickness of the first information layer as follow: the thickness of the second protective layer to 30nm and the thickness of the second thermal diffusion layer to 80nm.

### (Comparative Example 1)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 50nm and the thickness of the first protective layer to 20nm.

### (Comparative Example 2)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 40nm and the thickness of the first protective layer to 30nm.

### (Comparative Example 3)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 30nm, the thickness of the first protective layer to 40nm, the thickness of the second protective layer to 40nm and the thickness of the second thermal diffusion layer to 80nm.

### (Comparative Example 4)

### -Preparation of Dual-Layer Phase-Change Information Recording Medium-

A dual-layer phase-change information recording medium was prepared similarly to Example 1 except for changing the each layer thickness of the first information layer as follow: the thickness of the second protective layer to 40nm and the thickness of the second thermal diffusion layer to 80nm.

### (Comparative Example 5)

### -Preparation of Dual-Layer Phase-Change Information Recording Medium-

A dual-layer phase-change information recording medium was prepared similarly to Example 1 except for changing the thickness of the second thermal diffusion layer in the first information layer to 5nm.

### (Comparative Example 6)

### -Preparation of Dual-Layer Phase-Change Information Recording Medium-

A dual-layer phase-change information recording medium was prepared similarly to Example 1 except for changing the each layer thickness of the first information layer as follow: the thickness of the first thermal diffusion layer to 5nm, the thickness of the first protective layer to 20nm and the thickness of the second protective layer to 15nm.

### <Performance Test>

Next, recording, erasing and reading tests were conducted for each obtained Examples 2 to 7 and Comparative Examples 1 to 6 as similar to Example 1.

**Table 1**

| | Thickness of the First Thermal Diffusion Layer (nm) | Thickness of the First Protective Layer (nm) | Thickness of the second Protective Layer (nm) | Thickness of the Second Thermal Diffusion Layer (nm) | Transmittance of the First Information Layer | Initial Jitter | Jitter after 100 times of overwriting | Write Power at which Smallest Jitter can beObtained |
|---|---|---|---|---|---|---|---|---|
| Example 1 | 60 | 10 | 10 | 70 | 47% | 8.0% | 8.5% | 12.6mW |
| Example 2 | 50 | 20 | 15 | 70 | 47% | 7.6% | 8.0% | 12.0mW |
| Example 3 | 50 | 20 | 20 | 75 | 48% | 7.4% | 7.9% | 12.6mW |
| Example 4 | 40 | 30 | 25 | 75 | 47% | 7.7% | 8.3% | 12.0mW |
| Example 5 | 40 | 30 | 30 | 80 | 46% | 8.0% | 8.8% | 11.8mW |
| Example 6 | 60 | 10 | 20 | 75 | 47% | 7.4% | 7.9% | 12.4mW |
| Example 7 | 60 | 10 | 30 | 80 | 45% | 8.0% | 8.4% | 12.1mW |
| Comp. Ex. 1 | 50 | 20 | 10 | 70 | 48% | 7.6% | 8.8% | 14.2mW |
| Comp. Ex. 2 | 40 | 30 | 10 | 70 | 45% | 8.6% | 9.0% | 14.5mW |
| Comp. Ex. 3 | 30 | 40 | 40 | 80 | 45% | 8.0% | 10.2% | 12.0mW |
| Comp. Ex. 4 | 60 | 10 | 40 | 80 | 46% | 7.5% | 9.6% | 12.4mW |
| Comp. Ex. 5 | 60 | 10 | 10 | 5 | 49% | 10.6% | 16.4% | ≥15mW |
| Comp. Ex. 6 | 5 | 20 | 15 | 70 | 41% | 7.4% | 14.6% | 12.3mW |

From the result shown in Table 1, it turns out that the each thickness of the first protective layer and the second protective layer is preferably 30nm or less in terms of recording sensitivity and overwrite properties. And it also shows that when the relation between the thickness of the first protective layer d₁ and the thickness of the second protective layer d₂ satisfy d₁ ≤ d₂ + 5nm, the write power at which the smallest jitter can be obtained is 13mW or less and the recording sensitivity is satisfactory.

Moreover, when the thickness of the thermal diffusion layer was too thin, jitter after overwriting was rapidly increased. This shows that the thickness of the thermal diffusion layer is preferably 10nm or more. Further, when the thermal diffusion layer was disposed with a thickness of 200nm or more in other sample experimental production test, warpage of the disc increased and tracking could not be performed stably.

The recording sensitivity and overwrite properties of an optical information recording medium in which ZnS-30mol%SiO₂ were used for the first and the second protective layers and ITO (In₂O₃-10% by mass SnO₂) and SnO₂ were used for the first and the second thermal diffusion layers in the first information layer was investigated. The result obtained was as same as those using ZnS-20mol%SiO₂ and IZO (In₂O₃-10% by mass ZnO).

Furthermore, thermal conductivity at a thickness of 1,000nm was measured for each material. The thermal conductivity of ZnS-30mo%SiO₂ with 1,000nm thickness was 0.48W/m·K, the thermal conductivity of ITO with 1,000nm thickness was 3.6W/m·K and the thermal conductivity of SnO₂ with 1,000nm thickness was 3.2W/m·K and this shows that the thermal conductivities of the thermal diffusion layers are higher than those of the protective layers.

### (Example 8)

### -Preparation of Dual-Layer Phase-Change Information Recording Medium-

A dual-layer phase-change information recording medium was prepared similarly to Example 1 except for changing the each layer thickness in the first information layer as follow: the thickness of the first protective layer to 15nm, the thickness of the second protective layer to 15nm, the thickness of the first thermal diffusion layer to 55nm, the thickness of the second thermal diffusion layer to 100nm and the thickness of the first recording layer within the range of 2nm to 14nm as shown in Table 2.

### <Performance Test>

The recording property of each obtained dual-layer phase-change information recording medium was evaluated under the same condition as for the Example 1. The results are shown in Table 2.

**Table 2**

| | | | | | | | |
|---|---|---|---|---|---|---|---|
| Thickness of the First Recording Layer (nm) | 2 | 3 | 4 | 8 | 10 | 12 | 14 |
| Number of Times at which Jitter Increases by 3% by Overwriting | 1 | 100 | 200 | 500 | 500 | 300 | 300 |

As the thickness of the first recording layer increases, optical transmittance of the first information layer decreases. The thickness of the first recording layer in the first information layer is preferably 15nm or less to allow 40% of optical transmittance in the first information layer. When the transmittance of the first information layer was less than 40%, it was difficult to perform recording and reading in the second information layer appropriately.

Furthermore, it turns out that the overwrite properties of recording and reading in the first information layer heavily depend on the thickness of the protective layers in the first information layer.

From the result shown in Table 2, it turns out that the thickness of the first recording layer in the first information layer is preferably 3nm or more.

### -Preparation of Dual-Layer Phase-Change Information Recording Medium-

### (Example 9)

A dual-layer phase-change information recording medium was prepared similarly to Example 1 except for using Ag for the first reflective layer and disposing a barrier layer of SiC with 3nm thickness between the second protective layer and the first reflective layer.

### -Preparation of Dual-Layer Phase-Change Information Recording Medium-

### (Example 10)

A dual-layer phase-change information recording medium was prepared similarly to Example 1 except for applying Ag for the first reflective layer.

### <Performance Test>

Next, recording was performed in each dual-layer phase-change information recording medium of Examples 9 and 10 under the same condition as for the Example 1 and jitters of 3T reproduction signal of the first information layer were measured. Further, jitters of 3T reproduction signal of initial recording mark were measured after performing initial recording and storing each sample at 80°C-85%RH for 300 hours. The results are shown in Table 3.

**Table 3**

| | Barrier Layer | Jitter Before Storage | Jitter After Storage |
|---|---|---|---|
| Example 9 | with | 7.7% | 8.3% |
| Example 10 | without | 7.8% | 12.7% |

From the result shown in Table 3, it turns out that when Ag was used for the first reflective layer, jitter after storage of Example 9 having a barrier layer was appropriate and therefore it is excellent for an optical disc. On the other hand, although jitter of Example 10 was appropriate before storage, it was impossible to measure after storage.

The above results show that when a material containing sulfur is used for upper protective layers and Ag is used for the reflective layers, it is preferable to have a barrier layer in order to improve storage reliability.

### (Example 11)

### -Preparation of Dual-Layer Phase-Change Information Recording Medium-

First, a second substrate of polycarbonate resin with 120mm diameter and 1.1mm thickness having a concavo-convex guiding groove of 0.35µm pitch and 38nm groove depth on the surface was prepared.

Next, a second reflective layer of Al-3atomic%Ti with 80nm thickness was formed on the second substrate by magnetron sputtering using a sheeting sputtering apparatus manufactured by Balzers Ltd. A fourth protective layer of ZnS-20mol%SiO₂ with 20nm thickness was formed on the second reflective layer by magnetron sputtering. A second recording layer of Ge₅Ag₁In₂Sb₇₀Te₂₂ with 12nm thickness was formed on the fourth protective layer by magnetron sputtering. A third protective layer of ZnS-20mol%SiO₂ with 70nm thickness was formed on the second recording layer by magnetron sputtering. Finally, a second information layer was prepared.

A coating liquid containing ultraviolet curable resin (DVD 003 manufactured by Nippon Kayaku Co., Ltd.) was applied on the surface of the third protective layer of the second information layer by 2P (photo polymerization) to form an intermediate layer of 30µm thickness having a concavo-convex tracking guide of continuous groove with 0.32µm track pitch and 38nm groove depth.

Next, a second thermal diffusion layer of IZO (In₂O₃-10% by mass ZnO) with 70nm thickness was formed on the intermediate layer by magnetron sputtering using a sheeting sputtering apparatus manufactured by Balzers Ltd. A first reflective layer of Ag-3% by mass Zn-2% by mass Al with 10nm thickness was formed on the second thermal diffusion layer by magnetron sputtering. A second protective layer of ZnS-20mol%SiO₂ with 10nm thickness was formed on the first reflective layer by magnetron sputtering. A first recording layer of Ge₅Ag₁In₂Sb₇₀Te₂₂ with 6nm thickness was formed on the second protective layer by magnetron sputtering. A first protective layer of ZnS-20mol%SiO₂ with 10nm thickness was formed on the first recording layer by magnetron sputtering. A first thermal diffusion layer of IZO (In₂O₃-10% by mass ZnO) with 80nm thickness was formed on the first protective layer by magnetron sputtering. Finally, a first information layer was prepared.

Next, the first substrate of polycarbonate resin-made film with 12cm diameter and 50µm thickness was bonded with the surface of the first information layer through a transparent layer of two-sided adhesive sheet with 45µm thickness to prepare a dual-layer phase-change information recording medium.

Aside from this, a first information layer, a transparent layer and a first substrate were disposed on a substrate of 1.1mm thickness for measuring transmittance and the optical transmittance from the first substrate side was measured. The transmittance of the first information layer of the present invention after initialization was 49%.

### <Performance Test>

A conversing light beam was irradiated to each obtained dual-layer phase-change information recording medium using an optical system with a wavelength of 407nm and a numerical aperture of objective lens, 0.85 to perform recording under a condition of 6.5m/s linear velocity and 0.160µm/bit and initial jitter, jitter after 100 times of overwriting and recording sensitivity, a power at which a smallest jitter can be obtained were measured. As a result, jitter was 7% or less at a power of 10mW or less for the first information layer and overwrite properties were satisfactory. The recording was also performed to the second information layer under the same condition and evaluated. As a result, jitter was 9% or less at a power of 10m W or less and overwrite properties were satisfactory.

Moreover, other experimental production tests showed that a transmittance of 40% or more is required for the first information layer in order to perform appropriate recording and reading of the second information layer even when recording and reading are performed using an optical system with a numerical aperture of 0.85.

From above results, it turns out that it is possible to perform appropriate recording and reading using the dual-layer phase-change information recording medium of the present invention by adjusting the thickness of the first substrate within the range of 10µm to 600µm even when the numerical aperture (NA) of the objective lens used for recording and reading are changed.

And other experimental production tests showed that appropriate recording and reading were possible for the first and the second information layers when the thickness of the recording layer is within 3nm to 15nm, thickness of the reflective layer is within 3nm to 20nm and the thickness of the thermal diffusion layer is within 10nm to 200nm in the first information layer.

### (Example 12)

### -Preparation of Dual-Layer Phase-Change Information Recording Medium-

First, a first substrate of polycarbonate resin with 120mm diameter and 0.58mm thickness having a concavo-convex guiding groove of 0.74µm pitch and 33nm groove depth on the surface was prepared.

Next, a first thermal diffusion layer of IZO (In₂O₃-10% by mass ZnO) with 40nm thickness was formed on the first substrate by magnetron sputtering using a sheeting sputtering apparatus manufactured by Balzers Ltd. A first protective layer of ZnS-20mol%SiO₂ with 10nm thickness was formed on the first thermal diffusion layer by magnetron sputtering. A first recording layer of Ge₅Ag₂In₃Sb₆₈Te₂₂ with 6nm thickness was formed on the first protective layer by magnetron sputtering. A second protective layer of ZnS-20mol%SiO₂ with 10nm thickness was formed on the first recording layer by magnetron sputtering. A first reflective layer of Ag-3% by mass Zn-2% by mass Al with 10nm thickness was formed on the second protective layer by magnetron sputtering. A second thermal diffusion layer of IZO (In₂O₃ -10% by mass ZnO) with 100nm thickness was formed on the first reflective layer by magnetron sputtering. Finally, a first information layer was prepared.

Next, a second substrate of polycarbonate resin with 120mm diameter and 0.58mm thickness having concavo-convex guiding groove of 0.75µm pitch and 33nm groove depth was prepared. Next, a second reflective layer of Al-3atomic%Ti with 80nm thickness was formed on the second substrate by magnetron sputtering using a sheeting sputtering apparatus manufactured by Balzers Ltd. A fourth protective layer of ZnS-20mol%SiO₂ with 20nm thickness was formed on the second reflective layer by magnetron sputtering. A second recording layer of Ge₅Ag₂In₃Sb₆₈Te₂₂ with 12nm thickness was formed on the fourth protective layer by magnetron sputtering. A third protective layer of ZnS-20mol%SiO₂ with 80nm thickness was formed on the second recording layer by magnetron sputtering. Finally, a second information layer was prepared.

Next, initialization was performed by irradiating a laser beam to each of the first and second information layers from the first substrate side and the surface side of the second information layer respectively. The optical transmittance of the first information layer at a wavelength of 660nm was measured from the first substrate side using a spectral photometer manufactured by Shimadzu Corporation and the result was 45%.

An epoxy-based ultraviolet curable resin (intermediate layer) was applied on the surface of the first information layer with a thickness of 50µm and the first information layer and the second information layer were bonded facing each other and ultraviolet irradiation was performed. A dual-layer phase-change information recording medium in which the first substrate, the first information layer, the intermediate layer, the second information layer and the second substrate were provided in this sequence was prepared.

### <Performance Test>

A conversing light beam was irradiated to the obtained dual-layer phase-change information recording medium using an optical system with a wavelength of 660nm and a numerical aperture of objective lens, 0.65 to perform recording under a condition of 3.5m/s linear velocity and 0.267µm/bit and initial jitter, jitter after 100 times of overwriting and recording sensitivity, a power at which a smallest jitter can be obtained were measured. As a result, jitter was 9% or less at a power of 28mW or less for the first information layer and overwrite properties were satisfactory. When the recording was performed to the second information layer under the same condition and evaluated, jitter was 9% or less at a power of 28mW or less and overwrite properties were also satisfactory.

### Industrial Applicability

The dual-layer phase-change information recording medium of the present invention excels in overwrite properties, allows high-density rewriting even when a blue-violet laser is used and can be broadly used for CD-RW, DVD+RW, DVD-RW, DVD-RAM and Blue-ray Disc system using a blue-violet laser, for example.

## Claims

1. A dual-layer phase-change information recording medium comprising:
a first substrate;
a second substrate;
a first information layer;
an intermediate layer; and
a second information layer,
wherein the first information layer, the intermediate layer and the second information layer are disposed between the first substrate and the second substrate in this sequence,
wherein at least any one of recording and reading of information is performed by laser beam irradiation from the first substrate side,
wherein the first information layer comprises at least a first thermal diffusion layer, a first protective layer, a first recording layer, a second protective layer, a first reflective layer and a second thermal diffusion layer in this sequence, and
wherein each thickness of the first protective layer and the second protective layer is 35nm or less, each thickness of the first thermal diffusion layer and the second thermal diffusion layer is 10nm or more and the thickness of the first protective layer d₁ (nm) and the thickness of the second protective layer d₂ (nm) satisfy the relation of the next equation, d₁ ≤ d₂ + 5nm.

2. The dual-layer phase-change information recording medium according to claim 1, wherein the thermal conductivities of the first thermal diffusion layer and the second thermal diffusion layer are higher than the thermal conductivities of the first protective layer and the second protective layer.

3. The dual-layer phase-change information recording medium according to claim 1, wherein the first protective layer and the second protective layer are composite dielectrics comprising 50mol% or more and 90mol% or less of at least one selected from ZnS, ZnO, TaS₂ and rare-earth sulfide and also comprising a thermostable compound having a melting point or decomposition point of 1,000°C or more.

4. The dual-layer phase-change information recording medium according to claim 3, wherein the thermostable compound having a melting point or decomposition point of 1,000°C or more is any one of oxide, nitride and carbide of an element selected from Mg, Ca, Sr, Y, La, Ce, Ho, Er, Yb, Ti, Zr, Hf, V, Nb, Ta, Zn, Al, Si, Ge and Pb and fluoride of an element selected from Ca, Mg and Li.

5. The dual-layer phase-change information recording medium according to claim 4, wherein the first protective layer and the second protective layer comprise ZnS and SiO₂.

6. The dual-layer phase-change information recording medium according to any one of claims 1 to 5, wherein at least any one of the first protective layer and the second protective layer comprises ZnS and at least any one of the first thermal diffusion layer and the second thermal diffusion layer comprises an oxide exhibiting electric conducting property.

7. The dual-layer phase-change information recording medium according to any one of claims 1 to 6, wherein at least any one of the first thermal diffusion layer and the second thermal diffusion layer comprises any one of IZO (In₂O₃-ZnO) and ITO (In₂O₃-SnO₂).

8. The dual-layer phase-change information recording medium according to any one of claims 1 to 7, wherein each thickness of the first protective layer and the second protective layer is 5nm to 30nm.

9. The dual-layer phase-change information recording medium according to claim 8, wherein each thickness of the first protective layer and the second protective layer is 25nm or less.

10. The dual-layer phase-change information recording medium according to any one of claims 1 to 9, wherein each thickness of the first thermal diffusion layer and the second thermal diffusion layer is 10nm to 200nm.

11. The dual-layer phase-change information recording medium according to any one of claims 1 to 10, wherein the first recording layer comprises Sb and Te and further comprises at least one selected from Ag, In, Ge, Sn, Al, Ta, V, Co, Zr, Ga, Si, Nb, Cr, Pt, Pb, S, N and O.

12. The dual-layer phase-change information recording medium according to any one of claims 1 to 11, wherein the thickness of the first recording layer is 3nm to 15nm.

13. The dual-layer phase-change information recording medium according to any one of claims 1 to 12, wherein the first reflective layer comprises at least one selected from Au, Ag, Cu, W, Al and Ta.

14. The dual-layer phase-change information recording medium according to any one of claims 1 to 13, wherein the thickness of the first reflective layer is 3nm to 20nm.

15. The dual-layer phase-change information recording medium according to any one of claims 1 to 14, wherein the optical transmittance of the first information layer relative to a laser beam wavelength of 350nm to 700nm is 40% to 70%.

16. The dual-layer phase-change information recording medium according to any one of claims 1 to 15, wherein a transparent layer is disposed between the first substrate and the first thermal diffusion layer.

17. The dual-layer phase-change information recording medium according to any one of claims 1 to 16, wherein a first barrier layer is disposed between the second protective layer and the first reflective layer.

18. The dual-layer phase-change information recording medium according to claim 17, wherein the first reflective layer comprises Ag.

19. The dual-layer phase-change information recording medium according to any one of claims 1 to 18, wherein the thickness of the first substrate is 10µm to 600µm.

20. A recording and reading method of dual-layer phase-change information recording medium comprising:
irradiating a laser beam at a wavelength of 350nm to 700nm from a first substrate side to each information layer of a dual-layer phase-change information recording medium to perform at least any one of recording and reading of information,
wherein a dual-layer phase-change information recording medium comprises:
a first substrate;
a second substrate;
a first information layer;
an intermediate layer; and
a second information layer,
wherein the first information layer, the intermediate layer and the second information layer are disposed between the first substrate and the second substrate in this sequence,
wherein at least any one of recording and reading of information is performed by laser beam irradiation from the first substrate side,
wherein the first information layer comprises at least a first thermal diffusion layer, a first protective layer, a first recording layer, a second protective layer, a first reflective layer and a second thermal diffusion layer in this sequence, and
wherein each thickness of the first protective layer and the second protective layer is 5nm or less, each thickness of the first thermal diffusion layer and the second thermal diffusion layer is 10nm or more and the thickness of the first protective layer d₁ (nm) and the thickness of the second protective layer d₂ (nm) satisfy the relation of the next equation, d₁ ≤ d₂ + 5nm.
